# EUROPEAN PATENT APPLICATION

(11) **EP 4 576 275 A1**
(43) Date of publication of application: **25.06.2025**
(21) Application number: 23916728.1
(22) Date of filing: 18.01.2023
(51) Int. Cl.: H01M 4/66, H01M 4/04, H01M 10/052

(54) **CURRENT COLLECTOR, SECONDARY BATTERY, ELECTRIC DEVICE, AND PREPARATION METHOD FOR CURRENT COLLECTOR**

(71) Applicant: Contemporary Amperex Technology (Hong Kong) Limited, Central (HK)
(72) Inventor: MA, Li, Ningde, Fujian 352100 (CN); GUAN, Wenhao, Ningde, Fujian 352100 (CN); GE, Xiaoming, Ningde, Fujian 352100 (CN)
(74) Representative: Kraus & Lederer PartGmbB
(86) International application number: PCT/CN2023/072881
(87) International publication number: WO 2024/152241

(57) **Abstract**

Disclosed herein is a current collector, a secondary battery an electrical device, and a method for preparing the current collector. The current collector includes a substrate. The substrate includes the porous material. The affinity material is disposed in pores of the porous material. The affinity material is configured to promote the deposition of metal ions in an electrolyte solution. The affinity material includes at least one of a carbon-based material, a non-metal oxide, a carbide, a fluoride, a nitride, a sulfide, a phosphide, and an organic material. The above manner is able to effectively reduce the nucleation overpotential of the metal ions on the porous material of the current collector, promote the uniform diffusion and deposition of the metal ions within the pores of the porous material of the current collector, inhibit the generation of a dendrite, and improve the cyclic performance and safety of the battery.

## Description

### TECHNICAL FIELD

The present application relates to the field of batteries and specifically to a current collector, a secondary battery, an electrical device, and a method for preparing the current collector.

### BACKGROUND

The cyclicity and safety of a secondary battery are closely related to a material and a structure of an electrode current collector. Compared with a conventional current collector, a current collector made of a porous material has received increasing attention due to a high specific surface area and a plurality of nucleation sites. However, metal ions (e.g., lithium ions and sodium ions) commonly used in an electrolyte solution of a battery have a large nucleation overpotential on the conventional current collector made of the porous material, hence are not easy to wet the surface of the porous material, and are preferentially deposited on the surface of the porous material, which hence can result in the pores inside the porous material being clogged and hence being not able to be utilized, is not conducive to the uniform deposition of the metal ions in the pores, and is prone to produce a dendrite, resulting in the decline of the cyclicity of the battery. In serious cases, the dendrite can puncture a separator, resulting in a short circuit of the battery, and hence affecting the safety performance of the battery.

### SUMMARY

An main objective of the present application to solve the technical problem is to provide a current collector, a secondary battery, an electrical device, and a method for preparing the current collector, which are able to effectively reduce the nucleation overpotential of metal ions on a porous material of the current collector, promote the uniform diffusion and deposition of the metal ions within pores of the porous material of the current collector, inhibit the generation of a dendrite, and improve the cyclic performance and safety of the battery.

In a first aspect, the present application provides a current collector, including a substrate. The substrate includes a porous material. An affinity material is disposed in pores of the porous material. The affinity material is configured to promote the deposition of metal ions in an electrolyte solution. The affinity material includes at least one of a carbon-based material, a non-metal oxide, a carbide, a fluoride, a nitride, a sulfide, a phosphide, and an organic material.

In the technical solution of an embodiment of the present application, the affinity material is disposed in the pores of the porous material of the substrate. The affinity material has a higher binding affinity to the metal ions in the electrolyte solution, which is conducive to promoting the uniform deposition of the metal ions in the electrolyte solution in the pores of the porous material, inhibiting the deposition of the metal ions on the surface of the porous material of the current collector, reducing a risk of clogging the pores of the porous material, increasing a utilization rate of the pores of the porous material, reducing the generation of a dendrite, and improving the cyclic performance and safety of a battery.

In some embodiments, the carbon-based material includes a heteroatom-doped carbon-based material. The bonding affinity between the affinity material and the metal ions in the electrolyte solution is able to be further improved.

In some embodiments, the carbon-based material includes at least one of graphite, graphene, graphyne, a hard carbon, and derivatives thereof. All of the above carbon-based materials are conducive to lowering the surface energy of the current collector, and promoting the nucleation of the metal ions on the current collector.

In some embodiments, the carbon-based material includes at least one of a nitrogen-atom-doped graphyne, a porous graphene, and graphitized spherical carbon particles. All of the above carbon-based materials are conducive to lowering the surface energy of the current collector, and promoting the nucleation of the metal ions on the current collector.

In some embodiments, the oxide includes at least one of a graphene oxide and derivatives thereof. All of the above materials are conducive to lowering the surface energy of the current collector, and promoting the nucleation of the metal ions on the current collector.

In some embodiments, the nitride includes at least one of a copper nitride, a molybdenum nitride, and derivatives thereof. All of the above materials are conducive to lowering the surface energy of the current collector, and promoting the nucleation of the metal ions on the current collector.

In some embodiments, the phosphide includes at least one of a copper sulfide, a molybdenum disulfide, and derivatives thereof. All of the above materials are conducive to lowering the surface energy of the current collector and promoting the nucleation of the metal ions on the current collector.

In some embodiments, the fluoride includes at least one of a copper fluoride, a nickel fluoride, a magnesium fluoride, and derivatives thereof. All of the above materials are conducive to lowering the surface energy of the current collector and promoting the nucleation of the metal ions on the current collector.

In some embodiments, the organic material includes at least one of polyvinylidene difluoride, pyrrole, pyridine, polyaniline, and derivatives thereof. All of the above materials are conducive to lowering the surface energy of the current collector, and promoting the nucleation of the metal ions on the current collector.

In some embodiments, the metal ions in the electrolyte solution include at least one of lithium ions or sodium ions. The lithium ions and the sodium ions are metal ions of an electrolyte solution of a common battery, which have a high nucleation overpotential in the porous material, are not easy to infiltrate the surface of the porous material, and are preferentially deposited on the surface of the porous material, clog pores of the porous material, and are prone to form the dendrite. The above method is able to effectively reduce the nucleation overpotential of the lithium ions and the sodium ions on the surface and in the pores of the porous material, significantly improve the uniformity thereof within the pores of the porous material, and inhibit the generation of the dendrite.

In some embodiments, the affinity material has a coating amount of 2-3 g/cm². The coating amount cannot clog the pores of the porous material to prevent the metal ions from being deposited within the pores and is also conducive to improving the uniformity of the deposition of the metal ions.

In some embodiments, the affinity material has a thickness of 2-20 µm. The thickness range is conducive to improving the uniformity of the affinity material within the pores of the porous material, also reducing the phenomenon of leaky plating, reducing the depletion of a deposited layer formed by the metal ions when the battery is discharged, and improving the activity of the deposited layer.

In some embodiments, the porous material includes one or more of a foamed copper and a de-alloyed porous copper. On the one hand, the porous material has a large specific surface area, which is conducive to reducing a surface current density and allowing the metal ions in the electrolyte solution to have uniform nucleation. On the other hand, a pore structure of the porous material leaves a space for the deposition of the metal ions, which effectively reduces the deposition of the metal ions on the surface of the current collector and infinite volume expansion.

In some embodiments, the porous material has a pore diameter of 5-500 µm and a porosity of 30% - 70%. The pore diameter and the porosity can balance a relationship between the electrical conductivity of the current collector and the transport performance of the ions of the electrolyte solution, thereby improving the overall performance of the battery.

In a second aspect, the present application provides a secondary battery, including a negative electrode. The negative electrode includes an above current collector. An affinity material is formed within pores of a porous material of a negative current collector, which is conducive to uniform deposition of metal ions in an electrolyte solution within the pores of the negative current collector, reduces the generation of a dendrite, and improves the cyclic performance and safety of the battery.

In some embodiments, the secondary battery is an anode-free secondary battery. Compared with a conventional secondary battery, the secondary battery has a further improved energy density, higher safety and stability, and smaller weight and volume.

In some embodiments, the secondary battery further includes an electrolyte solution. The electrolyte solution includes metal ions. The metal ions include at least one of sodium ions or lithium ions.

In a third aspect, the present application provides an electrical device, including an above secondary battery. The electrical device has better stability and safety in use.

In a fourth aspect, the present application provides a method for preparing a current collector, including the steps: provide a substrate, where the substrate includes a porous material; and form an affinity material within pores of the porous material to obtain the above current collector. As previously described, the current collector formed by the method has the affinity material within the pores. Therefore, the metal ions in an electrolyte solution can be uniformly deposited within the pores of the porous material to reduce the generation of a dendrite, which is conducive to improving the cyclic performance and safety performance of a battery.

In some embodiments, the method for preparing the current collector includes the steps: form the affinity material on the porous material by utilizing vapor-phase deposition; and form an insulating layer on the surface of the porous material to cover the affinity material on the surface of the porous material. The insulating layer is formed on the surface of the porous material, so that the deposition of the metal ions on the surface of the collector can be inhibited, thereby further promoting the deposition of the metal ions within the pores of the porous material, and reducing a dendrite to be generated.

The foregoing description is merely an overview of the technical solutions of the present application. The following describes specific embodiments of the present application illustratively to enable a clearer understanding of the technical solutions of the present application, enable embodiment of the technical solutions based on the content of the specification, and make the foregoing and other objectives, features, and advantages of the present application more evident and comprehensible.

### BRIEF DESCRIPTION OF DRAWINGS

Various other advantages and benefits will become clear to a person of ordinary skill in the art by reading the detailed description of an preferable embodiment below. The accompanying drawings are only used for an objective of showing the preferable embodiment, and are not considered as a limitation to the present application. Moreover, in all of the accompanying drawings, the same reference sign is used for indicating the same component. In the figures:
FIG. 1 shows a schematic structural diagram of some embodiments of a secondary battery of the present application.
FIG. 2 shows a schematic diagram of a decomposed structure of some embodiments of a secondary battery of the present application.
FIG. 3 is a schematic exploded view of a battery cell according to some embodiments of the present application;
FIG. 4 is a schematic structural diagram of a vehicle according to some embodiments of the present application;
FIG. 5 shows a flow diagram of an embodiment of a method for preparing a current collector of the present application.
FIG. 6 shows a flow diagram of another embodiment of a method for preparing a current collector of the present application.
FIG. 7 shows a topographical diagram of an optical microscope test of a current collector of Comparative Embodiment 1 of the present application.
FIG. 8 shows a topographical diagram of an optical microscope test of a current collector of Embodiment 8 of the present application.
FIG. 9 shows a topographical diagram of an optical microscope test of a current collector of Embodiment 5 of the present application.
FIG. 10 shows a topographical diagram of an optical microscope test of a current collector of Embodiment 2 of the present application.

### DETAILED DESCRIPTION OF EMBODIMENTS

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of embodiments of the present application, the term "a plurality of" means two or more (including two). Similarly, "a plurality of groups" means two or more groups (including two groups), and "a plurality of pieces" means two or more pieces (including two pieces).

At present, from the perspective of the development of the market, a power battery is becoming increasingly widely used. The power battery is not only used in an energy storage power system such as hydro, thermal, wind and solar power stations, but also widely used in an electric transportation vehicle such as electric bicycle, an electric motorcycle, and an electric vehicle, as well as many fields such as military equipment and an aerospace. The cyclicity and safety of the battery are closely related to a material and a structure of an electrode current collector. Compared with a conventional current collector, a current collector made of a porous material receives increasing attention due to a high specific surface area and a plurality of nucleation sites.

The inventor noted that metal ions (e.g., lithium ions and sodium ions) in an electrolyte solution of the battery have a high nucleation overpotential on the current collector made of the porous material, hence are not easy to infiltrate the surface of the porous material, and are preferentially deposited on the surface of the porous material when deposited on the porous material, thereby resulting in the pores inside the porous material being clogged and hence decreasing the uniformity of the deposition of the metal ions within the pores, which is easy to result in the formation of a dendrite, and is not conducive to the cyclic performance of the battery. Moreover, if the dendrite is serious, the dendrite directly pierces a separator and results in the short circuit of the battery, which affects the safety of the battery. The same problem exists when the metal ions embed and de-embed in the pores of the porous material.

To alleviate the problem of uneven deposition of the metal ions in the electrolyte solution within the pores of the porous material of the current collector, the applicant found that an affinity material with high binding affinity to the metal ions is formed within the pores of the porous material of the current collector, which can effectively reduce the nucleation overpotential of the metal ions, promote the uniform diffusion of the metal ions within the pores of the porous material, even out the deposition behavior of the metal ions, inhibit the formation of dendrite, and improve the cycle performance and safety of the battery.

Based on the above considerations, to solve the problem of the uneven deposition of the metal ions in the electrolyte solution within the pores of the porous material of the current collector, the inventor, after in-depth research, designed a current collector, including a substrate. The substrate includes a porous material. An affinity material is disposed in pores of the porous material. The affinity material is configured to promote the deposition of metal ions in an electrolyte solution. The affinity material includes at least one of a carbon-based material, a non-metal oxide, a carbide, a fluoride, a nitride, a sulfide, a phosphide, and an organic material. The above manner is able to effectively reduce the nucleation overpotential of the metal ions on the porous material of the current collector, promote the uniform diffusion and deposition of the metal ions within the pores of the porous material of the current collector, inhibit the generation of a dendrite, and improve the cyclic performance and safety of the battery.

The current collector is applied in a positive electrode plate and/or a negative electrode plate of a secondary battery. The secondary battery is a battery that can continue to be used by activating an active material by charging the battery after the battery is discharged. The reversibility of a chemical reaction is utilized to achieve the mutual conversion of chemical and electrical energy for a plurality of times of charging and discharging.

Typically, the secondary battery includes the positive electrode plate, the negative electrode plate, a separator, and an electrolyte. The separator is disposed between the positive electrode plate and the negative electrode plate to play a role of isolation. The electrolyte plays a role of conducting ions between the positive electrode plate and the negative electrode plate.

Specifically, in the present application, the substrate of the current collector includes the porous material. The affinity material is disposed in the pores of the porous material. The affinity material is configured to promote the deposition of the metal ions in the electrolyte solution. The affinity material includes at least one of a carbon-based material, a non-metal oxide, a carbide, a fluoride, a nitride, a sulfide, a phosphide, and an organic material.

The current collector, a structure for collecting a current in the battery, has a main function for collecting a current generated by an active substance of the battery to form a larger current output to the outside world, and includes a positive current collector and a negative current collector. The current collector can be made of materials selected from aluminum, a copper foil, a nickel foil, a stainless steel foil, a titanium foil, a nickel foam, a foamed copper, a polymer substrate coated with a conductive metal, and a combination thereof.

In some embodiments according to the present application, the substrate of the current collector includes the porous material. The porous material refers to a current collector material having a regular or irregular 3D pore structure. The porous material includes one or more of the foamed copper and a de-alloyed porous copper.

The foamed copper is a novel multifunctional material with a large number of connected or disconnected pores uniformly distributed in a copper matrix, with excellent electrical conductivity and ductility.

The de-alloyed porous copper refers to a nano-porous copper material prepared by a de-alloying process.

On the one hand, the above porous material has a large specific surface area, which is conducive to reducing a surface current density and allowing the metal ions in the electrolyte solution to have uniform nucleation. On the other hand, a pore structure of the porous material leaves a space for the deposition of the metal ions, which effectively reduces the deposition of the metal ions on the surface of the current collector and infinite volume expansion.

According to some embodiments of the present application, the porous material can also include a porous carbon-based material and the like.

According to some embodiments of the present application, the porous material has a pore diameter of 5-500 µm, for example, the pore diameter of the porous material can be 5 µm, 10 µm, 20 µm, 50 µm, 100 µm, 150 µm, 200 µm, 300 µm, 400 µm, 450 µm, 500 µm, and the like, or a range consisting of any two of the above values, e.g., 5-200 µm, 400-500 µm, 300-400 µm, 200-400 µm. The porous material has a porosity of 30%-70%, which can be, for example, 30%, 35%, 40%, 50%, 60%, 65%, and 70%, or a range consisting of any two of the above values, for example, 30%-40%, 50%-70%, 40%-65%, 30%-60%, and 65%-70%.

The pore diameter is an average radius of the pores of the porous material. It is easy to think that most of the cross sections of the pores are irregular and are not necessarily a standard circle. The cross section of the pore is usually regarded as a circle, and the size of the pore is indicated by the radius of the pore.

The porosity is a volume fraction occupied by the pores in the porous material.

The pore diameter and the porosity in the present application are both measured using a pressing pump method.

The above pore diameter and porosity are able to increase the amount of the metal ions deposited in the pores, improves the electrical conductivity of the current collector, is also conducive to the smooth movement of electrolyte ions within the pores, and improves the uniformity of deposition, thereby balancing a relationship between the electrical conductivity of the current collector and the ion transport performance of the electrolyte solution, and improving the overall performance of the battery.

The affinity material refers to a material with high bonding affinity to the metal ions in the electrolyte solution. The metal ions have more deposition active sites on the affinity material than those on a skeleton of the porous material. The affinity material can reduce the nucleation overpotential of the metal ions on the porous material.

The metal ions refers to metal cations of a metal salt used to provide a current in the electrolyte solution, such as lithium ions and sodium ions.

In this embodiment, the affinity material is disposed in the pores of the porous material of the substrate. The affinity material has a higher bonding affinity to the metal ions (e.g., the lithium ions and the sodium ions) in the electrolyte solution. The affinity material in the pores of the porous material is able to attract the metal ions in the electrolyte solution into the pores, thereby promoting uniform deposition of the metal ions in the pores of the porous material, inhibiting the deposition of the metal ions on the surface of the current collector to clog the pores, inhibiting the generation of the dendrite, and enhancing the cyclic performance and safety of the battery. Similarly, the affinity material is also conducive to promoting the embedding and de-embedding processes of the metal ions within the pores of the porous material.

According to some embodiments of the present application, the carbon-based material includes a heteroatom-doped carbon-based material. A heteroatom can be at least one of oxygen, nitrogen, boron, phosphorus, and sulfur.

The heteroatom-doped carbon-based material can reduce the nucleation overpotential of the metal ions in the electrolyte solution, which can further increase the bonding affinity of the affinity material to the metal ions in the electrolyte solution. This is because the dopant atoms interact with neighboring carbon atoms thereof in the carbon-based material to form electronegative sites that can act as Lewis bases. The electronegative sites interact strongly with the metal cations such as the lithium ions.

According to some embodiments of the present application, the carbon-based material includes at least one of graphite, graphene, graphyne, a hard carbon, and derivatives thereof; and/or, the carbon-based material includes at least one of a nitrogen-atom-doped graphyne, a porous graphene, and graphitized spherical carbon particles. The above carbon-based material can effectively reduce the surface energy of the current collector and promote the nucleation of the metal ions on the current collector.

In some embodiments according to the present application, the oxide includes at least one of a graphene oxide and derivatives thereof; and/or, the nitride includes at least one of a copper nitride, a molybdenum nitride, and derivatives thereof; and/or, the phosphide includes at least one of a copper sulfide, a molybdenum disulfide, and derivatives thereof; and/or, the fluoride includes at least one of a copper fluoride, a nickel fluoride, a magnesium fluoride, and derivatives thereof; and/or, the organic material includes at least one of polyvinylidene difluoride, pyrrole, pyridine, polyaniline, and derivatives thereof. The above material can effectively reduce the surface energy of the current collector and promote the nucleation of the metal ions on the current collector.

According to some embodiments of the present application, the affinity material can further include at least one of a metal material and a metal oxide.

According to some embodiments of the present application, the metal material includes an element capable of forming an alloy with the metal ions in the electrolyte solution; and/or, the metal material includes an element capable of forming a sosoloid with the metal ions in the electrolyte solution.

The sosoloid is a solid solution in which two or more metals are able to not only dissolve each other when molten, but also remain in a state of mutual solubility when solidified. After transformed into a solid state, the sosoloid still maintains the homogeneity of a tissue structure and the lattice type of a solvent metal. A solute metal can be distributed in a lattice of the solvent metal. The ordering of a sosoloid structure can usually increase the hardness and strength of the material and also reduce an electrical resistance.

After the metal ions form an alloy with the metal material in the affinity material, a diffusion rate and diffusion uniformity of the metal ions in the pores of the porous material can be further improved because the metal ions in the alloy have a diffusion rate larger than a self-diffusion rate of the metal ions. In addition, when the current collector of the porous material is used in a negative electrode, which forms the alloy and can also increase the potential of the negative electrode, thereby being conducive to improving the quality of an SEI (Solid Electrolyte Interface) film on the surface of the negative electrode, and being conducive to the enhancement of the cyclic stability of the battery. After the metal ions form the sosoloid with the metal material, the distribution uniformity can be further improved, and a surface morphology can be improved. The formed sosoloid can effectively avoid pulverization of the alloy due to a change in the volume of the alloy caused by stripping of a metal-ion deposited layer during the cyclic charging and discharging processes of the battery, improve the strength and hardness of the affinity material, stabilize a structure of the affinity material, and improve the cyclic stability of the battery.

In some embodiments according to the present application, the metal material includes at least one of Sn (tin), Mg (magnesium), Zn (zinc), Bi (bismuth), Pb (lead), Au (gold), Ag (silver), Al (aluminum), Si (silicon), In (indium), Ga (gallium), and alloys thereof.

The above metal materials have a higher affinity with the metal ions commonly used in the electrolyte solution of the battery such as the sodium ions and the lithium ions. Preferably, the metal material includes at least one of Mg, Sn, and Zn. More preferably, the metal material includes at least one of Mg and Zn. More preferably, the metal material includes Mg. Mg can form a sosoloid with the metal ions in the electrolyte solution. An affinity material including Mg has a more stable structure. Mg is close in nature to the sodium ions and the lithium ions. Therefore, the more uniform deposited layer can be formed using the affinity material of Mg.

According to some embodiments of the present application, the metal oxide includes at least one of an oxide of copper, an oxide of zinc, an oxide of magnesium, an oxide of antimony, and derivatives thereof.

According to some embodiments of the present application, the metal ions in the electrolyte solution include at least one of the lithium ions or the sodium ions.

The lithium ions and the sodium ions are the metal ions of the electrolyte solution of the common battery, which have a high nucleation overpotential in the porous material, do not easily infiltrate the surface of the porous material, are preferentially deposited on the surface of the porous material, clog the pores of the porous material, and are prone to form the dendrite. The above method is able to effectively reduce the nucleation overpotential of the lithium ions and the sodium ions on the surface and pores of the porous material, improve the uniformity thereof within the pores of the porous material, and inhibit the generation of the dendrite.

According to some embodiments of the present application, the affinity material has a coating amount of 2-3 g/cm². For example, the coating amount can be 2.2 g/cm², 2.3 g/cm², 2.4 g/cm², 2.5 g/cm², 2.6 g/cm², 2.7 g/cm², 2.8 g/cm², 2.9 g/cm², 3g/cm² and the like, or a range consisting of any two of the above values. For example, the coating amount can be 2-2.3 g/cm², 2.2-2.5 g/cm², 2.4-2.7 g/cm², 2.3-2.9 g/cm², 2.6-3 g/cm² and the like.

The coating amount cannot clog the pores of the porous material to prevent the metal ions from being deposited within the pores and is also conducive to improving the uniformity of the deposition of the metal ions.

According to some embodiments of the present application, the affinity material has a thickness of 2-20 µm. For example, the thickness can be 2 µm, 2.5 µm, 3 µm, 5 µm, 10 µm, 15 µm, 19 µm, 20 µm, or a range consisting of any two of the above values, for example, the thickness can be 2-3 µm, 3-5 µm, 10-20 µm, and 15 µm-19 µm. The thickness range is conducive to improving the uniformity of the affinity material within the pores of the porous material, reducing the phenomenon of leaky plating, also reducing the depletion of the deposited layer formed by the metal ions when the battery is discharged, and improving the activity of the deposited layer.

The present application further provides a secondary battery, including a negative electrode. The negative electrode includes an above current collector. An affinity material is formed within pores of a porous material of a negative current collector, which is conducive to uniform deposition or embedding of metal ions in an electrolyte solution within the pores of the porous material of the negative current collector, reduces the generation of a dendrite, and improves the cyclic performance and safety of the secondary battery.

In one embodiment, the secondary battery is an anode-free secondary battery. Anode-free means that in an initial state, an anode structure includes only a current collector but no active material. After a first charging is completed, a metal in a positive electrode material migrates to the surface of the negative current collector. A metal layer is formed on the negative current collector. During charging, metal electrolyte ions in an electrolyte solution combine with electrons on the surface of and/or within the pores of the negative current collector, and a deposition behavior occurs. During discharging, a deposited layer on the surface of the negative current collector strips off and dissolves to revert to the metal electrolyte ions and the electrons, which return to a positive electrode, so repeatedly. Compared with a traditional secondary battery, the anode-free secondary battery has a further improved energy density, improved safety and stability, and smaller weight and volume.

Because the surface of the negative electrode does not contain the active material, the metal ions in the electrolyte solution have a large nucleation overpotential at the negative electrode, hence are not easy to infiltrate the negative current collector, and are easy to prioritize deposition on the surface of the negative current collector. When the current collector is the porous material, the deposited layer preferentially deposited on the surface of the current collector prevents the metal ions from entering pores inside the current collector, resulting in a low pore utilization rate and easy formation of the dendrite. The formed affinity material within the pores is able to significantly improve this problem. After the first charging, the metal preferentially migrates into pores of the negative current collector and combines uniformly with the affinity material to form a metal composite material. In a subsequent charging process, the metal ions in the electrolyte solution preferentially diffuse and deposit on the metal composite material within the pores of the current collector to form the deposited layer, which improves the homogeneity of the deposited layer and is conducive to improving the stability and safety of the battery.

According to some embodiments of the present application, the negative electrode of the secondary battery can also be a conventional anode structure, which specifically includes the negative current collector and a negative film layer disposed on the negative current collector. The negative film layer includes a negative active material.

A specific type of the negative active material is not limited. An active material known in the art that can be used for the negative electrode of the secondary battery can be used. A person skilled in the art can choose the active material according to actual needs. As an example, the negative active material can include, but is not limited to, one or more of a silicon-based material, a silicon-carbon material, a carbon material, and a selenium-based material. Specifically, the negative active material includes one or more of a artificial graphite, a natural graphite, a hard carbon, a soft carbon, the silicon-based material, and a tin-based material. The silicon-based material can be selected from one or more of a monatomic silicon, a silicon oxide compound (e.g., silicon suboxide), a silicon carbon complex, a silicon nitrogen complex, and a silicon alloy. The selenium-based material can be selected from one or more of a monatomic selenium, a selenium oxide, and a selenium alloy. All of these materials are commercially available.

The negative active material can reduce the electrode impedance of the negative electrode, increase an electrode capacity, and reduce the abnormal precipitation of sodium metal. The sodium metal is easily embedded in the above negative active material and also easily de-embedded. When the battery undergoes a cycle of charging and discharging, there is little structural change in the active material, which is conducive to prolonging the service life of the battery.

In some embodiments, to further improve the energy density of the battery, the negative active material can include the silicon-based material.

The negative film layer typically and more optionally includes a binder, a conductive agent, and other optional adjuvants.

As an example, the conductive agent may be one or more of superconductive carbon, acetylene black, carbon black, Ketjen black, carbon dots, carbon nanotubes, graphene, or carbon nanofibers.

As an example, the binder may be one or more of styrene-butadiene rubber (SBR), water-based acrylic resin (water-based acrylic resin), polyvinylidene difluoride (PVDF), polytetrafluoroethylene (PTFE), poly(ethylene-co-vinyl acetate) (EVA), polyvinyl alcohol (PVA), or polyvinyl butyral (PVB).

As an example, the other optional adjuvants can be a thickening and dispersant (e.g., sodium carboxymethyl cellulose (CMC-Na)) and a PTC thermistor material.

The secondary battery operates on a principle of embedding-de-embedding of metal cations in an electrolyte salt. Taking sodium ions in the electrolyte salt as an example, when the battery is charged, the sodium ions are de-embedded from a positive electrode, pass through a separator in the electrolyte solution, and are embedded in the negative active material. At the same time, electrons flow from the positive electrode to the negative electrode in an external circuit. When the battery is discharged, the sodium ions are de-embedded from the negative active material, pass through the separator in the electrolyte solution, and are embedded in the positive electrode. At the same time, the electrons flow from the negative electrode to the positive electrode in the external circuit.

For the secondary battery, the affinity material is also conducive to guiding the metal ions to preferentially enter inside the pores of the porous material of the current collector to complete the embedding, thereby improving the pore utilization rate, and improving the stability and safety of the secondary battery.

The secondary battery further includes a positive electrode plate. The positive electrode plate usually includes a positive current collector and a positive film layer disposed on the positive electrode collector. The positive film layer includes a positive active material.

The positive current collector can be made of a conventional metal foil or a composite current collector (a metal material can be disposed on a polymer substrate to form the composite current collector). As an example, the positive current collector can be made of an aluminum foil.

The type of the positive active material is not particularly limited in the present application, and may be an active material known in the art for use in a positive electrode of a secondary battery, and may be selected by a person skilled in the art according to practical needs.

As an example, the positive active material can include, but is not limited to, one or more of a lithium transition metal oxide, an olivine-structured lithium-containing phosphate and respective modified compounds thereof, a transition metal oxide, a polyanionic compound, and a Prussian blue analogue. An example of the lithium transition metal oxide can include, but is not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. An example of the olivine-structured lithium-containing phosphate can include, but is not limited to, one or more of a lithium iron phosphate, a composite of the lithium iron phosphate and carbon, a lithium manganese phosphate, a composite of the lithium manganese phosphate and carbon, a lithium manganese iron phosphate, a composite of the lithium manganese iron phosphate and carbon, and modified compounds thereof. All of these materials are commercially available.

The modified compound for each of the above materials can perform doping modification and/or surface coating modification on the material.

The positive film layer typically and more optionally includes the binder, the conductive agent, and the other optional adjuvants.

As an example, the conductive agent may be one or more of superconductive carbon, acetylene black, carbon black, Ketjen black, carbon dots, carbon nanotubes, Super P (SP), graphene, and carbon nanofibers.

As an example, the binder may be one or more of styrene-butadiene rubber (SBR), water-based acrylic resin (water-based acrylic resin), polyvinylidene difluoride (PVDF), polytetrafluoroethylene (PTFE), poly(ethylene-co-vinyl acetate) (EVA), polyacrylic acid (PAA), carboxymethylcellulose (CMC), polyvinyl alcohol (PVA), or polyvinyl butyral (PVB).

As an example, the other optional adjuvants can be a thickening and dispersant (e.g., sodium carboxymethyl cellulose (CMC-Na)) and a PTC thermistor material.
In some embodiments, the positive current collector includes a substrate. The substrate includes the porous material. The affinity material is also disposed in the pores of the porous material. The affinity material is configured to promote the deposition of the metal ions in the electrolyte solution.

The secondary battery further includes the electrolyte solution. According to some embodiments of the present application, the electrolyte solution includes the metal ions. The metal ions include at least one of the sodium ions or lithium ions.

The sodium ions or the lithium ions in the electrolyte solution can complete a deposition-stripping process or an embedding-de-embedding process on the negative current collector. In particular, for the lithium ions, the lithium ions have a larger nucleation overpotential on the conventional current collector made of the porous material, and are more likely to be preferentially deposited on the surface of the porous material. The above affinity material can significantly solve this problem, and enhance the cyclic performance and safety of a lithium metal secondary battery.

The secondary battery also includes a separator. The separator is disposed between the positive electrode plate and a negative electrode plate. As an insulating layer, the separator can effectively prevent the positive electrode plate and the negative electrode plate from coming into contact with each other and resulting in an internal short circuit, and at the same time allows electrolyte ions to pass through smoothly. The performance of the separator determines an interface structure, an internal resistance, and the like of the secondary battery, and directly affects the mechanical strength and the safety performance of the battery.

A specific type of a material of the separator is not limited. A material known in the art that can be used for the separator of the secondary battery can be used. A person skilled in the art can choose the material according to needs. As an example, the material of the separator can include, but is not limited to, one or more of a polyolefin, a fluoropolymer, a cellulose, and a glass fiber. The polyolefin can include, but is not limited to, one or more of polypropylene and polyethylene. All of these materials can be commercially available.

In some embodiments, the separator includes a base film and a coating positioned on one side/two sides of the base film. The coating includes a padding. The padding can include an inorganic material, a polymer adhesive, and a dispersant. The inorganic material includes one or more of boehmite and silicon dioxide. A polymer adhesive material includes one or more of PVDF (polyvinylidene difluoride) and polystyrene-acrylate. The dispersant material includes polyvinyl alcohol and the like. The coating is disposed on one side/two sides of the separator, which is able to improve and regulate the performance of the separator. The type of the padding is regulated, which can improve and regulate the performance of the separator. For example, the padding with heat-insulating and heat-resistant properties can be added to improve the heat-resistant property of the separator. A specific type of a material of the base film is not limited and can include, but is not limited to, one or more of polyethylene, polypropylene, and a glass fiber. All of these materials can be commercially available.

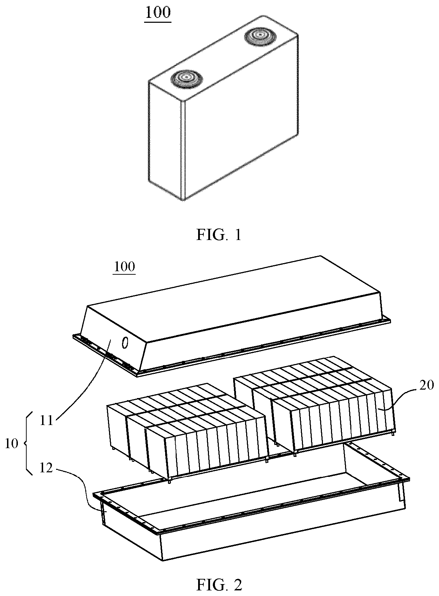

No particular limitation on a shape of the secondary battery in an embodiment of the present application is provided, and the shape may be a cylindrical shape, a square or any other shapes. FIG. 1 shows a secondary battery 100 with a square structure as one example. FIG. 1 shows a schematic structural diagram of some embodiments of the secondary battery 100 of the present application.

In some embodiments, the secondary battery 100 of the present application includes a box body 10 and a battery cell 20. The battery cell 20 is accommodated in the box body 10. Please refer to FIG. 2, FIG. 2 shows a schematic diagram of a decomposed structure of some embodiments of the secondary battery 100 of the present application. The box body 10 is configured to provide an accommodating space for the battery cell 20. The box body 10 can adopt various structures. In some embodiments, the box body 10 can include a first portion 11 and a second portion 12. The first portion 11 and the second portion 12 are capped with each other. The first portion 11 and the second portion 12 together define the accommodating space for accommodating the battery cell 20. The second portion 12 can be a hollow structure with an opening at one end. The first portion 11 can be a plate-like structure. The first portion 11 is capped on the opening side of the second portion 12 so that the first portion 11 and the second portion 12 together define the accommodating space. The first portion 11 and the second portion 12 can also be hollow structures with an opening at the side. The opening side of the first portion 11 is capped on the opening side of the second portion 12. Of course, the box body 10 formed by the first portion 11 and the second portion 12 can be of a plurality of shapes, such as, a cylinder and a cuboid.

In the secondary battery 100, the plurality of battery cells 20 can be disclosed. The plurality of battery cells 20 can be connected to each other in series or in parallel, or in series and in parallel. The connection in series and in parallel indicates that the plurality of battery cells 20 are connected both in series and in parallel. The plurality of battery cells 20 can be directly connected in series or in parallel, or in series and in parallel. A whole formed by the plurality of battery cells 20 is accommodated in the box body 10. Of course, the secondary battery 100 can also be a battery module formed by the plurality of battery cells 20 connected first in series or in parallel, or in series and in parallel. The plurality of battery modules are then connected in series or in parallel, or in series and in parallel to form one whole, which is accommodated in the box body 10. The secondary battery 100 can also include other structures, for example, the secondary battery 100 can also include a busbar component for realizing an electrical connection between the plurality of battery cells 20.

Each of the battery cells 20 can be the secondary battery. The secondary battery can be a lithium-ion battery, a sodium-ion battery, a magnesium-ion battery, an aluminum-ion battery, but is not limited thereto. The battery cell 20 can be a cylinder, a flat body, a cuboid, or other shapes.

The battery has stacked and coiled production methods, i.e., the battery is divided into two types of a laminated battery and a jelly roll battery. The laminated battery has a uniform current collection effect, a smaller internal resistance, and a big specific power. However, to ensure precision, a mold has an extremely high precision requirement. Therefore, the laminated battery has high equipment investment, a more complex process, and low production efficiency. The jelly roll battery has simple production, general precision requirement for equipment in production and assembly processes, high production efficiency, and low costs. In terms of performance, the jelly roll battery has excellent high and low temperature performance, very rapid charging, an ultra-long service life, a smooth high output voltage, a sturdy structure and strong shock resistance.

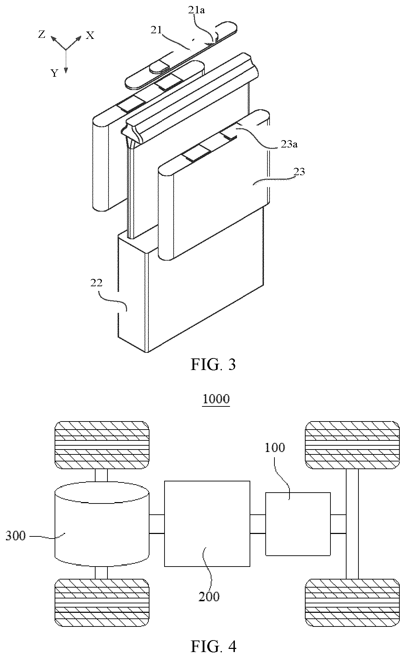

Please refer to FIG. 3, FIG. 3 shows a schematic diagram of a decomposed structure of the battery cell 20 of some embodiments of the present application. The battery cell 20 is the smallest unit that makes up the battery. As shown in FIG. 3, the battery cell 20 includes an end cap 21, a housing 22, an electrode assembly 23, and other functional components.

The end cap 21 is a component that is capped on an opening in the housing 22 to insulate an internal environment of the battery cell 20 from an external environment. Without limitation, the end cap 21 can have a shape adapted to that of the housing 22 to cooperate with the housing 22. Optionally, the end cap 21 can be made of a material having a certain hardness and strength (e.g., an aluminum alloy), so that the end cap 21 is less likely to deform when subjected to extrusion and collision. Therefore, the battery cell 20 can have a higher structural strength and improved safety performance. The end cap 21 can be provided with functional components such as an electrode terminal 21a. The electrode terminal 21a can be configured to be electrically connected to the electrode assembly 23 for outputting or inputting electrical energy of the battery cell 20. In some embodiments, the end cap 21 can also be provided with a pressure relief mechanism for discharging an internal pressure of the battery cell 20 when the internal pressure or a temperature of the battery cell 20 reaches a threshold value. The end cap 21 can also be made of various materials, such as, copper, iron, aluminum, a stainless steel, the aluminum alloy, and plastic. The embodiments of the present application do not impose any special limitation thereon. In some embodiments, an insulator can also be disposed on the inner side of the end cap 21. The insulator can be configured to isolate an electrically connected component within the housing 22 from the end cap 21 to reduce a risk of short circuit. Exemplarily, the insulator can be plastic, rubber, and the like.

The housing 22 is an assembly for cooperating with the end cap 21 to form an internal environment of the battery cell 20. The formed internal environment can be configured to accommodate the electrode assembly 23, an electrolyte solution, and other components. The housing 22 and the end cap 21 can be separate components. An opening can be disposed on the housing 22 to form the internal environment of the battery cell 20 by allowing the end cap 21 to cap the opening at the opening. Without limitation, it is also possible to integrate the end cap 21 and the housing 22. Specifically, the end cap 21 and the housing 22 can be formed into one common connecting surface before the other components enter the housing. When it is necessary to encapsulate the interior of the housing 22, the end cap 21 can then be capped on the housing 22. The housing 22 can be of a plurality of shapes and a plurality of sizes, such as a cuboid shape, a cylindrical shape and a hexagonal shape. Specifically, the shape of the housing 22 can be determined based on the specific shape and size of the electrode assembly 23. The housing 22 can be made of various materials, such as, copper, iron, aluminum, a stainless steel, the aluminum alloy, and plastic. The embodiments of the present application do not impose any special limitation thereon.

The electrode assembly 23 is a component in which an electrochemical reaction occurs in the battery cell 20. One or more electrode assemblies 23 can be contained within the housing 22. A positive electrode plate and a negative electrode plate are wound or laminated and placed to primarily form the electrode assembly 23. The separator is generally disposed between the positive electrode plate and the negative electrode plate. Portions of the positive electrode plate and the negative electrode plate having an active substance form a main body portion of the electrode assembly. Portions of the positive electrode plate and the negative electrode plate not having the active substance each form a tab 23a. A positive tab and a negative tab can be located together at the end of the main body portion or separately at the two ends of the main body portion. During charging and discharging of the battery, a positive active material and a negative active material react with the electrolyte solution. The tab 23a is connected to the electrode terminal to form a current circuit.

The electrolyte solution and the secondary battery disclosed in the embodiments of the present application can be used in an electrical device using the secondary battery as a power source or in various energy storage systems using the secondary battery as an energy storage element. The electrical device can be, but is not limited to, a cell phone, a tablet, a laptop computer, an electric toy, a electric tool, an electromobile, an electric vehicle, a ship, a spacecraft, and the like. The electric toy can include a stationary electric toy or a mobile electric toy, for example, a game console, an electric car toy, an electric boat toy, and an electric airplane toy. The spacecraft can include an airplane, a rocket, a space shuttle, a spaceship and the like.

The energy storage system can be an energy storage power system such as hydroelectric, thermal, wind and solar power stations.

For ease of description in the following embodiments, a vehicle 1000 is used as an example of the electrical device according to an embodiment of the present application.

Please refer to FIG. 4, FIG. 4 shows a schematic structure of a vehicle 1000 of some embodiments of the present application. The vehicle 1000 can be a fuel vehicle, a gas vehicle or a new energy vehicle. The new energy vehicle can be a battery electric vehicle, a hybrid electric vehicle or an extended-range vehicle and the like. The secondary battery 100 is disposed inside the vehicle 1000. The secondary battery 100 can be disposed at the bottom or the head or the tail of the vehicle 1000. The secondary battery 100 can be used for powering the vehicle 1000, for example, the secondary battery 100 can be used as an operating power source of the vehicle 1000. The vehicle 1000 can also include a controller 200 and a motor 300. The controller 200 is configured to control the secondary battery 100 to power the motor 300, e.g., for an operational power requirement for starting, navigating, and operating the vehicle 1000.

In some embodiments of the present application, the secondary battery 100 can not only serve as the operating power source of the vehicle 1000, but can also serve as a driving power source of the vehicle 1000, which replaces or partially replaces a fuel oil or a natural gas to provide a driving power for the vehicle 1000.

The current collectors of the secondary batteries of the above electrical device and the energy storage system include the substrate. The substrate includes a porous material. An affinity material is disposed in the pores of the porous material. The affinity material is configured to promote the deposition of the metal ions in the electrolyte solution. The affinity material includes at least one of a carbon-based material, a non-metal oxide, a carbide, a fluoride, a nitride, a sulfide, a phosphide, and an organic material. The nucleation overpotential of the metal ions on the porous material of the current collector is able to be effectively reduced. The uniform diffusion and deposition of the metal ions within the pores of the porous material of the current collector is promoted. The generation of a dendrite is inhibited. The cyclic performance and safety of the secondary battery are improved. Therefore, the stability and safety of the use of the above electrical device and the energy storage system are improved.

The above electrical device and the energy storage system also fall within the scope of protection of the present application.

The present application also provides a method for preparing a current collector, which is configured to prepare the above current collector.

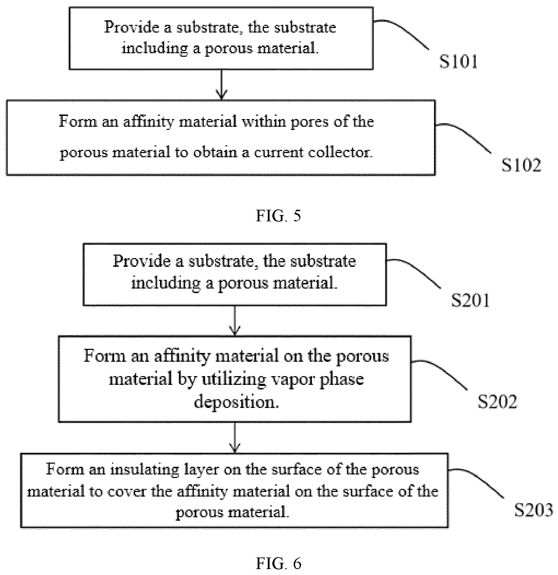

In some embodiments according to the present application, please refer to FIG. 5, FIG. 5 shows a flow diagram of an embodiment of the method for preparing the current collector of the present application. The method includes the steps:
S101: provide a substrate, where the substrate includes a porous material.
S102: form an affinity material within pores of the porous material to obtain the current collector.

The affinity material can be formed within the pores of the porous material by utilizing vapor-phase deposition, electroplating, or the like.

As described previously, the affinity material includes at least one of a carbon-based material, a non-metal oxide, a carbide, a fluoride, a nitride, a sulfide, a phosphide, and an organic material. The current collector formed by the method has the affinity material. Therefore, the metal ions in an electrolyte solution can be uniformly deposited within the pores of the porous material to reduce the generation of dendrite, which is conducive to improving the cyclic performance and safety performance of a secondary battery.

In some embodiments according to the present application, please refer to FIG. 6, FIG. 6 shows a flow diagram of another embodiment of a method for preparing a current collector of the present application. The method includes the steps:
S201: provide a substrate, where the substrate includes a porous material.
S202: form an affinity material on the porous material by utilizing vapor-phase deposition.
S203: form an insulating layer on the surface of the porous material to cover the affinity material on the surface of the porous material.

The more uniform affinity material can be formed by means of vapor-phase deposition, thereby being conducive to uniform deposition of metal ions of an electrolyte solution on the affinity material. In some embodiments according to the present application, the affinity material can also be formed on the porous material by utilizing a means other than the vapor-phase deposition, such as electroplating.

Because the insulating layer has a weak bonding affinity to the metal ions, the insulating layer is formed on the surface of the porous material so that the metal ions can be inhibited to be preferentially deposited on the surface of the current collector, which further promotes the preferential deposition of the metal ions within the pores of the porous material, and reduces the generation of a dendrite.

The following describes the current collector and the method for preparing the current collector by taking a Li (lithium) ion battery as an example and in conjunction with specific embodiments. It shall be appreciated by a person skilled in the art that the current collector and the method for preparing the current collector described herein are only examples, and that any other suitable preparation method falls within the scope of the present application.

### Embodiment 1:

1) A commercially available foamed copper with a thickness of 171 µm, a porosity of 72%, and an average pore diameter of 165 µm was purchased.
   A foamed copper sample was placed in vacuum magnetron sputtering equipment to deposit magnesium metal (Mg). The vacuum magnetron sputtering instrument was set with an upper air pressure limit of 0.8 MPa. There was a quartz microbalance under a substrate inside a cavity. The amount of sputtering was controlled by measuring the weight of the substrate after starting sputtering. A PVD-Mg20 foamed copper sample was obtained by plating a plating layer of 2.0 g/cm² with a magnesium target.
2) The PVD-Mg20 foamed copper sample was soaked in 1 mol/L HCl (hydrochloric acid) for 15 seconds to remove an oxide layer on the surface, and then was washed with deionized water and anhydrous ethanol, respectively. Acid pickling could remove an oxide layer on the surface of the affinity material, improve a bonding affinity between the affinity material and the metal ions in an electrolyte solution, and increase deposition sites.
3) The sample in 2) was taken out and dried in an oven at 60°C for 10 minutes to obtain a PVD-Mg20 lithium-friendly 3D foamed copper current collector.

### Embodiments 2 and 3:

A plating amount of an affinity material Mg was changed. Others were the same as a preparation method of Embodiment 1.

### Embodiments 4-6:

An affinity material was changed to Zn. A plating amount of the affinity material was 2.0 g/cm², 2.5 g/cm² and 3.0 g/cm² in turn. Others were the same as a preparation method of Embodiment 1.

### Embodiments 7-9:

An affinity material was changed to Sn. A plating amount of the affinity material was 2.0 g/cm², 2.5 g/cm² and 3.0 g/cm² in turn. Others were the same as a preparation method of Embodiment 1.

### Comparative Embodiment 1:

A foamed copper was replaced with a blank foamed copper without an affinity material. Others were the same as a preparation method of Embodiment 1.

### Comparative Embodiments 2-4:

Acid pickling time was changed to 5s, 30s, and 60s in turn. Others were the same as a preparation method of Embodiment 2.

### Embodiment 10:

A foamed copper was cut into small discs with a diameter of 18 mm. Then, the foamed copper was placed in a CVD (chemical vapor-phase deposition) tube furnace, heated at 900°C for 10 minutes in a mixed gas stream of C₂H₂ (acetylene) and Ar (argon) at a flow rate of 100/10 sccm, and vented with a gas while being cooled.

### Embodiment 11

A foamed copper was cut into small discs with a diameter of 18 mm. The foamed copper was then immersed in a mixture solution of 15 mL of 0.13 M (NH₄)2S₂O₈ (ammonium persulfate) and 15 mL of 2.67 M NaOH (sodium hydroxide) for 10 minutes, then fished out, cleaned and dried. The foamed copper was then heated in a CVD tube furnace in a mixed gas stream of Ar/NH₃ (ammonia) at 350°C for 1 hour with a mixed gas at a flow rate of 100/50 sccm, and vented with air while being cooled.

### Embodiment 12

A foamed copper was cut into small discs with a diameter of 18 mm. The foamed copper was then immersed in a mixed solution of 15 mL of 0.13 M (NH₄)2S₂O₈ and 15 mL of 2.67 M NaOH for 10 minutes, then fished out, cleaned and dried. The foamed copper was then heated in a CVD tube furnace in a mixed gas stream of Ar/NH₃ at 350°C for 1 hour with a mixed gas at a flow rate of 100/50 sccm, and vented with a gas while being cooled.

### Embodiment 13

A foamed copper was cut into small discs with a diameter of 18 mm. The foamed copper was then immersed in a mixture solution of 15 mL of 0.13 M (NH₄)2S₂O₈ and 15 mL of 2.67 M NaOH for 10 minutes, then fished out, and then immersed into 5 M of Na₂S (sodium sulfide) aqueous solution for 4 hours. The sample was then washed and dried.

### Embodiment 14

A foamed copper was cut into small discs with a diameter of 18 mm. The small discs and 100 mg of NaH₂PO₂ (sodium hypophosphite) were respectively placed in 2 porcelain arks. The two porcelain arks were placed in the center of a CVD tube furnace and vented with argon gas. The NaH₂PO₂-loaded was placed on a side close to an inlet pipe, and was heated at 300°C for 10 minutes.

### Embodiment 15

A foamed copper was cut into small discs with a diameter of 18 mm. The small discs and 100 mg of PTFE (polytetrafluoroethylene) were respectively placed in 2 porcelain arks. The two porcelain arks were placed in the center of a CVD tube furnace and vented with argon gas. The PTFE-loaded was placed on a side close to an inlet pipe, and was heated at 300°C for 10 minutes.

### Embodiment 16

A foamed copper was cut into small discs with a diameter of 18 mm and soaked into 40 mL of a 1:1 mixture solution of DI water and ethanol dissolved with 0.5 g of C₆H₅N₃ (3-amino-6-cyanopyridine), and heated at 60°C for 1 hour. After that, 40 mL of an aniline solution containing 0.4 mL of aniline was added, and continuously heated for 15 minutes. Then, 15 mL of a mixed solution containing a 5.3% ammonium sulfate and 1 M of HCl was added dropwise, and continuously heated for 2 hours. The sample was then washed and dried.

### Test method

1. Test method for overpotential (nucleation overpotential):
   1) A discharge test was performed using a button battery. A gradient lithium-friendly 3D current collector obtained from Embodiment and Comparative Embodiment was used for a positive electrode of a battery. A lithium tablet was used for a negative electrode. 1 M of LiFSI (lithium bistrifluoromethanesulfonimide) was dissolved in DME (dimethyl ether) for an electrolyte solution. 12 µm of a PE (polyethylene) film was used for a separator.
   2) Discharge conditions: a half-battery was discharged at room temperature with a constant current at a current density of 1 mA/cm². A difference value between a voltage nadir and a stabilized discharge voltage was nucleation overpotential.
2. Test method for (a current collector/a Li half-battery) short-circuit time:
   1) A discharge test was performed using a button battery. A gradient lithium-friendly 3D current collector obtained from Embodiment and Comparative Embodiment was used for a positive electrode of a battery. A lithium tablet was used for a negative electrode. 1 M of LiFSI (lithium bistrifluoromethanesulfonimide) was dissolved in DME (dimethyl ether) for an electrolyte solution. 12 µm of a PE (polyethylene) film was used for a separator.
   2) Discharge conditions: the half-battery was discharged with a constant current at room temperature, with a current density of 1 mA/cm², and continuously discharged until a short-circuit signal appeared, i.e., a battery voltage jumped to 0V.
   3) The time from the start of discharge to the short circuit was recorded.
3. A test method of first efficiency CE, average CE, and the number of turns maintained at a 50% capacity of a full battery cycle of (LFP/a current collector):
   CE was an electrode Coulombic efficiency, which was a ratio of a battery discharge capacity to a charge capacity during the same cycle. First efficiency CE = first discharge capacity/first charge capacity. Average CE was an average value of discharge capacity/charge capacity of a plurality of cycles.

LFP was the abbreviation of LiFePO₄, that is, a lithium iron phosphate, which was an electrode material of a lithium-ion battery.
1) A cyclic test was performed using a button battery. The lithium iron phosphate was used for a positive electrode. A ratio of the lithium iron phosphate: a conductive carbon black: PVDF (polyvinylidene difluoride) binder was 8:1:1. A gradient lithium-friendly 3D current collector obtained from Embodiment and Comparative Embodiment was used for a negative electrode. 1 M of LiFSI was dissolved in DME for the electrolyte solution. 12 µm of the PE film was used for the separator.
2) Charging conditions: The battery was charged at room temperature using a constant current-constant voltage mode (CC-CV mode). The battery was first charged in a constant current mode at a fixed rate of 0.2C until a voltage rose to 3.65V, and then switched to a constant voltage mode with a cut-off current of 0.05C to fully charge the battery.
3) Discharging conditions: The battery was discharged at a discharge rate of 0.5 C in a constant current mode until the voltage dropped to 2 V, and 200 cycles were conducted.
4) A value of first discharge capacity/first charge capacity was obtained to acquire First Efficiency CE.
5) Values of discharge capacity/charge capacity for 200 cycles were obtained and averaged to obtain average CE.
6) The number of turns at the 50% capacity of the full-battery cycle was obtained and recorded to acquire the number of turns maintained at the 50% capacity of the full-battery cycle of (LFP/the current collector).

Please refer to Table 1 for a specific material, a preparation process, and performance test results of the current collector.

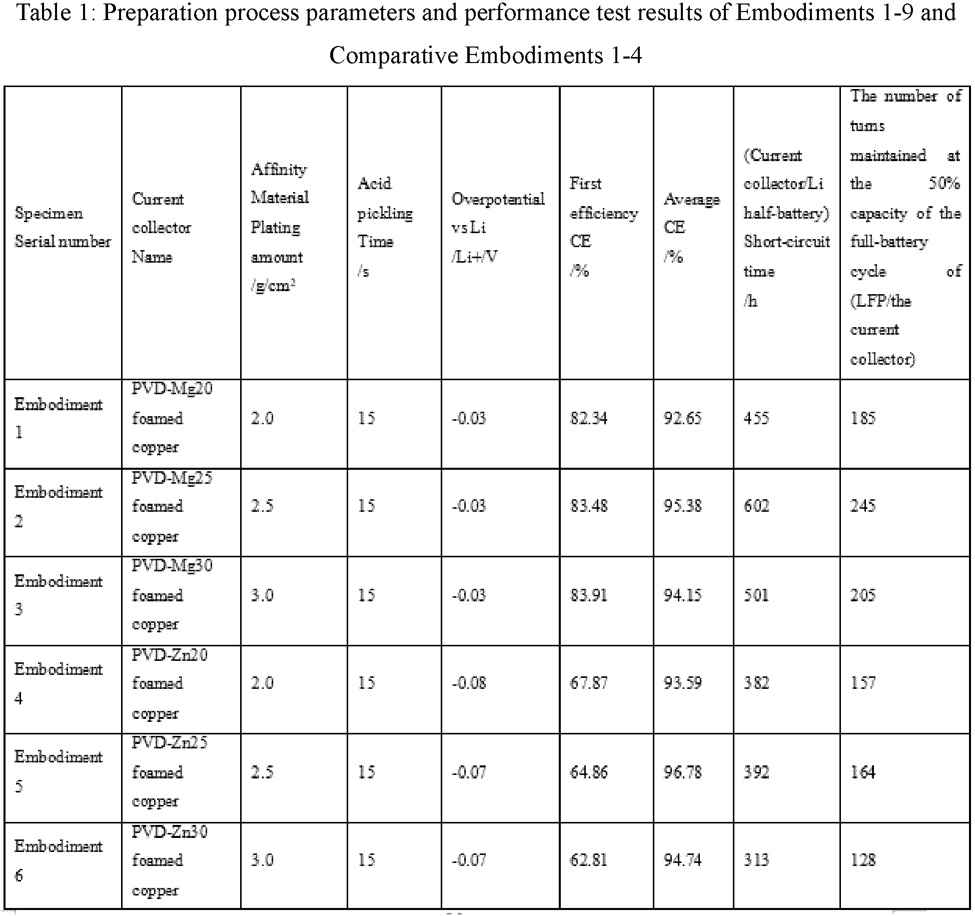

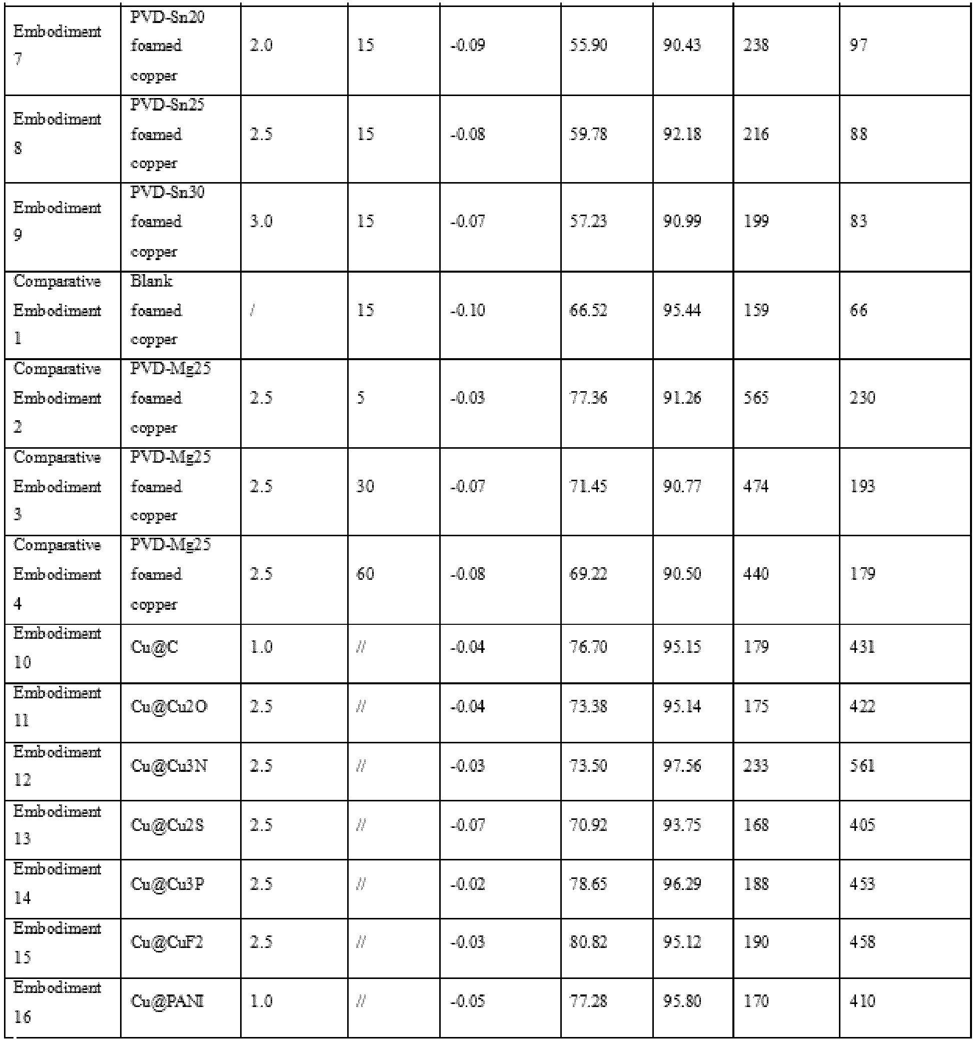

In Table 1, the meaning of the name of the current collector in Embodiments 1-9 and Comparative Embodiments 2-4 was as follows: an affinity material preparation method + an affinity material type + an affinity material plating amount + a porous material type. For example, in Embodiment 1, the meaning of the name of the current collector of "a PVD-Mg20 foamed copper" was as follows: The affinity material was formed by a PVD (physical vapor-phase deposition) process. The affinity material type was metal of Mg. The affinity material coating amount was 2.0 g/cm². A porous material type was the foamed copper.
The meaning of the name of the current collector in Embodiments 10-16 was as follows: the foamed copper + the affinity material type. For example, in Embodiment 10, the meaning of the name of the current collector "Cu@C" was as follows: the foamed copper + a carbon-based affinity material. In Embodiment 16, the meaning of the name of the collector "Cu@PANI" was as follows: the foamed copper + a polyaniline affinity material.

### Result analysis

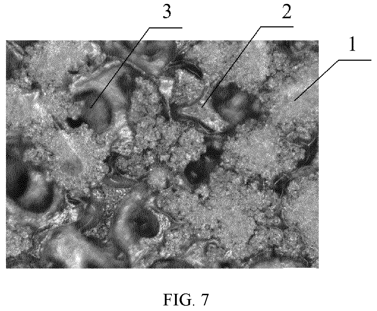

1. For Comparative Embodiment 1 in which a current collector is a blank foamed copper, it can be seen that (the current collector/a Li half-battery) short-circuit time is only 159 hours. The number of turns maintained at a 50% capacity of a full-battery cycle of (LFP/the current collector) is only 66 hours, which shows a poor battery performance. For the deposition effect of lithium ions thereon, please refer to FIG. 7, FIG. 7 shows a topographical diagram of an optical microscope test of the current collector of Comparison Example 1 of the present application. 1 indicates a lithium deposited layer. 2 indicates a foamed copper skeleton. 3 indicates pores within the foamed copper. Lithium is locally nucleated on the foamed copper skeleton 2, which shows obvious agglomeration. There are a large number of zones on the foamed copper skeleton 2 that are not covered by lithium. The lithium deposited layer 1 has low homogeneity and is preferentially deposited on the surface of the foamed copper skeleton 2. The pores 3 are clogged.
2. Embodiments 1-9 are compared to Comparative Embodiment 1, the values of (the collector/the Li half-battery) short-circuit time and the number of turns maintained at the 50% capacity of the full-battery cycle of (LFP/the current collector) are both relatively high, indicating that the foamed copper with the affinity material has a decreased lithium nucleation overpotential and improved cyclic performance compared to the blank foamed copper.
3. Embodiments 1-6 are compared with Embodiments 7-9, Embodiments 1-6 have relatively higher values for (the current collector/the Li half-battery) short-circuit time and the number of turns maintained at the 50% capacity of the full-battery cycle of (LFP/the current collector), indicating that the affinity materials of Mg and Zn have a better effect on the battery cyclic performance enhancement than the affinity material of Sn.
4. Embodiments 1-3 are compared with Embodiments 4-6, Embodiments 1-3 have relatively higher values for (the current collector/the Li half-battery) short-circuit time and the number of turns maintained at the 50% capacity of the full-battery cycle of (LFP/the current collector), indicating that the affinity material of Mg has a better improvement effect than the affinity material of Zn.

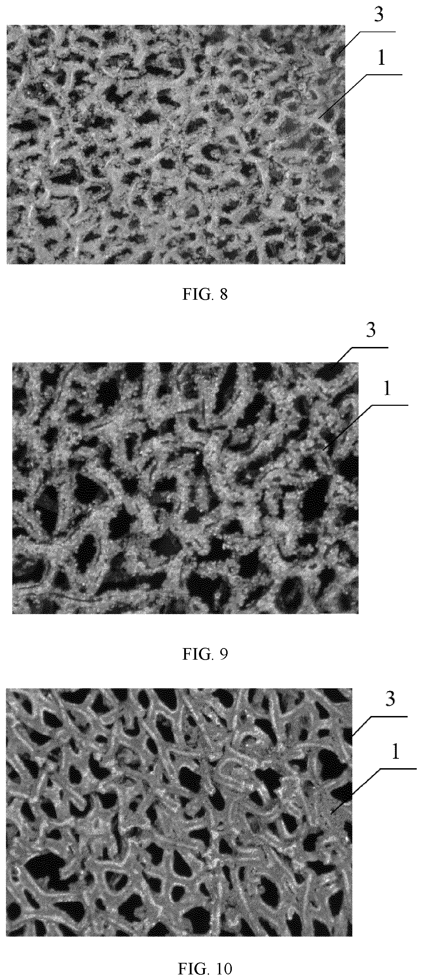

The topographical diagrams of Embodiments 2, 5, and 8 can be referenced in FIGS. 8-10. FIG. 8 shows a topographical diagram of the optical microscope test of the current collector of Embodiment 8 of the present application. FIG. 9 shows a topographical diagram of the optical microscope test of the current collector of Embodiment 5 of the present application. FIG. 10 shows a topographical diagram of the optical microscope test of the current collector of Embodiment 2 of the present application. It can be observed from FIG. 8 that when the affinity material is Sn, although Li has been uniformly deposited within the pores 3 of the foamed copper skeleton (not shown in the figure, the foamed copper skeleton is covered by the lithium deposited layer 1), a mossy lithium deposited layer 1, i.e., a mossy lithium, is formed, which has a safety hazard. It can be observed from FIG. 9, when the affinity material is Zn, because Li in a Li-Zn alloy has a certain degree of solid solubility (the maximum content of a solute in a sosoloid), the lithium deposited layer 1 is more uniformly deposited within the pores 3 of the foamed copper skeleton (not shown in the figure, the foamed copper skeleton is covered by the lithium deposited layer 1), and more fitted with the foamed copper skeleton. The mossy lithium is reduced, but the surface of the lithium deposited layer 1 remains rougher. As can be observed from FIG. 10, when the affinity material is Mg, Li in an alloy has a higher solid solubility. The surface roughness of the lithium deposited layer 1 is greatly reduced. Li is uniformly deposited in the pores 3 of the foamed copper skeleton (not shown in the figure, the foamed copper skeleton is covered by the lithium deposited layer 1). Correspondingly, the performance test results are the best in Embodiments 1 -9.

5. Embodiment 2 is compared with Embodiments 1 and 3, values for (the current collector/the Li half-battery) short-circuit time and the number of turns maintained at the 50% capacity of the full-battery cycle of (LFP/the current collector) are relatively higher, indicating that the affinity material with the plating amount of 2.5 g/cm² has the best improvement.

6. Embodiment 2 is compared with Comparative Embodiments 2-4. The values of (the current collector/the Li half-battery) short-circuit time and the number of turns maintained at the 50% capacity of the full-battery cycle of (LFP/the current collector) are relatively high, indicating that when acid pickling is performed using hydrochloric acid to remove an oxidized layer of the foamed copper with the affinity material, acid pickling time of 15s is the best. If the acid pickling time is too short, the oxidized layer may not be removed completely, and active sites deposited on the affinity material are less. If the acid pickling time is too long, the oxidized layer is removed completely but some of the affinity material is dissolved, which also reduces the active sites deposited on the affinity material.

7. Embodiments 10-16 are compared with Comparative Embodiment 1. The values of (the current collector/the Li half-battery) short-circuit time and the number of turns maintained at the 50% capacity of the full-battery cycle of (LFP/the current collector) are significantly increased, and an absolute value of overpotential is reduced, indicating that lithium-friendly layers of a carbon base, an oxide, a nitride, a sulfide, a phosphide, a fluoride, an organic molecule are grown on the foamed copper and used as a negative current collector for an anode-free lithium-metal battery, which can effectively reduce the nucleation overpotential of Li and improve the performance of the battery.

In summary, the present application provides a current collector, a secondary battery, an electrical device, and a method for preparing the current collector. The current collector includes a substrate. The substrate includes a porous material. An affinity material is disposed in pores of the porous material. The affinity material is configured to promote the deposition of metal ions in an electrolyte solution. The above manner is able to effectively reduce the nucleation overpotential of the metal ions on the porous material of the current collector, promote the uniform diffusion and deposition of the metal ions within the pores of the porous material of the current collector, inhibit the generation of a dendrite, and improve the cyclic performance and safety of the secondary battery.

In conclusion, it should be noted that the foregoing embodiments are merely for describing the technical solutions of the present application rather than for limiting the present application. Although the present application has been described in detail with reference to the foregoing embodiments, a person of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A current collector **characterized by** comprising:
a substrate, wherein the substrate comprises a porous material;
an affinity material is disposed in pores of the porous material, the affinity material is configured to promote deposition of metal ions in an electrolyte solution;
the affinity material comprises at least one of a carbon-based material, a non-metal oxide, a carbide, a fluoride, a nitride, a sulfide, a phosphide, and an organic material.

2. The current collector according to claim 1, **characterized in that**,
the carbon-based material comprises a heteroatom-doped carbon-based material.

3. The current collector according to claim 1 or 2, **characterized in that**,
the carbon-based material comprises at least one of graphite, graphene, graphyne, a hard carbon and derivatives thereof; and/or
the carbon the carbon-based material comprises at least one of a nitrogen-atom-doped graphyne, a porous graphene, and graphitized spherical carbon particles.

4. The current collector according to claim 1, **characterized in that**,
the oxide comprises at least one of a graphene oxide and derivatives thereof;
and/or, the nitride comprises at least one of a copper nitride, a molybdenum nitride and derivatives thereof;
and/or, the phosphide comprises at least one of a copper sulfide, a molybdenum disulfide and derivatives thereof;
and/or, the fluoride comprises at least one of a copper fluoride, a nickel fluoride, a magnesium fluoride and derivatives thereof;
and/or, the organic material comprises at least one of polyvinylidene difluoride, pyrrole, pyridine, polyaniline and derivatives thereof.

5. The current collector according to any one of claims 1-4, **characterized in that**,
the affinity material further comprises at least one of a metal material and a metal oxide.

6. The current collector according to claim 5, characterized that,
the metal material comprises an element capable of forming an alloy with the metal ions in the electrolyte solution; and/or,
the metal material comprises an element capable of forming a sosoloid with the metal ions in the electrolyte solution; and/or.
the metal oxide comprises at least one of an oxide of copper, an oxide of zinc, an oxide of magnesium, an oxide of antimony, and derivatives thereof.

7. The current collector according to any one of claims 1-6, **characterized in that**,
the metal ions in the electrolyte solution comprise at least one of lithium ions or sodium ions.

8. The current collector according to any one of claims 1-7, **characterized in that** the affinity material has a coating amount of 2-3 g/cm².

9. The current collector according to any one of claims 1-8, **characterized in that** the affinity material has a thickness of 2-20 µm.

10. The current collector according to any one of claims 1-9, **characterized in that**,
the porous material comprises one or more of a foamed copper and a de-alloyed porous copper.

11. The current collector according to any one of claims 1-10, **characterized in that**,
the porous material has a pore diameter of 5-500 µm and a porosity of 30%-70%.

12. A secondary battery **characterized by** comprising a negative electrode, wherein the negative electrode comprises the current collector according to any one of claims 1-11.

13. The secondary battery according to claim 12, **characterized in that**,
the secondary battery is an anode-free secondary battery.

14. The secondary battery according to claim 12 or 13, **characterized in that**,
the secondary battery further comprises an electrolyte solution, the electrolyte solution comprises metal ions, the metal ions comprise at least one of sodium ions or lithium ions.

15. An electrical device **characterized by** comprising the secondary battery according to any one of claims 12-14.

16. A method for preparing a current collector, **characterized by** comprising the steps of:
providing a substrate, the substrate comprising a porous material;
forming an affinity material within pores of the porous material to obtain the current collector according to any one of claims 1-11.

17. The method for preparing the current collector according to claim 16, **characterized in that**,
forming the affinity material on the porous material by utilizing vapor phase deposition;
forming an insulating layer on a surface of the porous material to cover the affinity material on the surface of the porous material.
